# FASCICULE DE BREVET EUROPEEN

(11) **EP 2 748 231 B1**
(45) Date de publication et mention de la délivrance du brevet: **17.08.2016**
(21) Numéro de dépôt: 12750406.6
(22) Date de dépôt: 06.07.2012
(51) Int. Cl.: C08G 77/08, C08L 83/04, C09D 183/04

(54) **COMPOSITION SILICONE RETICULABLE PAR DESHYDROGENOCONDENSATION EN PRESENCE D'UN CATALYSEUR DE TYPE CARBENE**
SILIKONZUSAMMENSETZUNG ZUR VERNETZUNG MITTELS DEHYDROGENIERTER KONDENSATION UNTER VERWENDUNG EINES CARBEN-KATALYSATORS
SILICONE COMPOSITION CROSSLINKABLE BY DEHYDROGENOCONDENSATION IN THE PRESENCE OF A CARBENE CATALYST

(30) Priorité: 07.07.2011 FR 1156186
(43) Date de publication de la demande: 02.07.2014
(73) Titulaire: Bluestar Silicones France, 69003 Lyon (FR)
(72) Inventeur: MALIVERNEY Christian, F-69690 Saint Julien sur Bibost (FR); SAINT-JALMES Laurent, F-69390 Vourles (FR)
(74) Mandataire: Mekki, Boualem
(86) Numéro de dépôt international: PCT/FR2012/000270
(87) Numéro de publication internationale: WO 2013/004926

(56) Documents cités:
- FR-A1- 2 856 690
- FR-A1- 2 864 543
- FR-A1- 2 900 153
- US-A1- 2011 160 454
- HERRMANN W A: "N-HETEROCYCLIC CARBENES: A NEW CONCEPT IN ORGANOMETALLIC CATALYSIS", ANGEWANDTE CHEMIE. INTERNATIONAL EDITION, WILEY VCH VERLAG, WEINHEIM, vol. 41, no. 8, 1 janvier 2002 (2002-01-01), pages 1291-1309, XP001111697, ISSN: 1433-7851, DOI: 10.1002/1521-3773(20020415)41:8<1290::AID- ANIE1290>3.0.CO;2-Y

## Description

La présente invention concerne le domaine de la catalyse des réactions de déshydrogénocondensation permettant la polymérisation/réticulation de silicone. Les espèces réactives en jeu sont des monomères, oligomères, et/ou polymères de nature polyorganosiloxane.

Les motifs réactifs concernés dans ces espèces sont d'une part les motifs ≡SiH et d'autre part les motifs ≡siOH. La déshydrogénocondensation entre ces motifs réactifs silicones conduit à la formation de liaisons ≡Si-O-Si≡ et à la libération d'hydrogène gazeux.

Cette déshydrogénocondensation est une alternative aux voies de polymérisation/réticulation connues dans le domaine des silicones, à savoir la voie polyaddition par réaction entre des motifs ≡SiH et ≡Si-alcényle (vinyle), ainsi qu'à la voie polycondensation par réaction entre des motifs ≡SiOR et ≡SiOR (avec R = alkyle). Toutes ces voies de polymérisation / réticulation conduisent à des produits silicones plus ou moins polymérisés et plus ou moins réticulés, qui peuvent constituer des produits utilisables dans de multiples applications : adhésifs, produits d'étanchéification, produits de jointage, apprêt d'adhésion, revêtements anti-adhérents, mousses.....

Il est connu selon le brevet français FR-B-1 209 131 qu'une réaction entre un silanol Ph₂Si(OH)₂ et un dit organosiloxane [(Me₂HSi) ₂O] avec Me = méthyle et Ph = phényle, par déshydrogénocondensation peut être catalysée par un acide chloroplatinique (H₂PtCl₆, 6H₂O).

Il est aussi connu d'utiliser un complexe du rhodium (RhCl₃ [(C₈H₁₇)₂S]₃), par exemple tel que cité dans le brevet américain US-B-4,262,107, un complexe du platine tel que le catalyseur de Karstedt, les catalyseurs métalliques à base dé platine, de rhodium, de palladium, ou d'iridium. Comme catalyseur à base d'iridium on peut citer les composés suivants: IrCl(CO)(TPP)₂, Ir (CO)₂ (acac) ; Ir H(Cl)₂ (TPP)₃; [IrCl(Cyclooctène)₂]₂ Ir 1(CO)(TPP)₂ et Ir H(CO)(TPP)₃ formules dans lesquelles TPP signifie un groupement triphénylphosphine et acac un groupement acétylacétonate.

D'autres exemples, sont des catalyseurs comme les amines, le nickel colloïdal ou le dilaurate de dibutylétain (voir l'ouvrage de NOLL "Chemistry and technology of silicones", page 205, Academic Press, 1968-2ème édition). Cependant, les catalyseurs à base d'alkylétain, bien que très efficaces, le plus souvent incolores, liquides et solubles dans les huiles silicones présentent l'inconvénient d'être toxiques (CMR2 toxiques pour la reproduction).

D'autres catalyseurs tels que des dérivés de bore de type tris (pentafluorophériyl) borane sont décrits dans la demande de brevet français FR-A-2 806 930.

Le brevet américain US-B-4,262,107 décrit une composition silicone comprenant un polydiméthyldisiloxane à extrémités silanol, un réticulant constitué par un polyorganosiloxane à motifs ≡SiH dans la chaîne et à extrémités triméthylsilyle et un catalyseur constitué par un complexe du rhodium (RhCl₃ [(C₈H₁₇)₂S]₃). Cette composition silicone réticulable par déshydrogénocondensation en présence d'un complexe de rhodium, peut être utilisée pour la réalisation de revêtements anti-adhérents sur des supports souples tels que le papier et les films plastiques ou métalliques. La réticulation s'opère à une température de 150°C.

La demande de brevet européen EP-A-1 167 424 décrit l'obtention de copolymères silicones blocs linéaires par déshydrogénocondensation d'un polydiméthylsiloxane à extrémités silanol et d'un polyorganosiloxane comprenant des groupements aromatiques et à extrémités =SiH en présence d'un catalyseur métallique qui peut-être à base de platine, de rhodium, de palladium ou d'iridium, le platine étant particulièrement préféré.

La demande de brevet français FR-A-2 806 930 décrit l'utilisation de dérivés de bore de type tris(pentafluorophényl)borane à titre de catalyseur thermoactivable pour la déshydrogénocondensation entre un polyorganosiloxane à motifs ≡siH et un polyorganosiloxane à motifs terminaux ≡SiOH. De telles compositions silicones réticulables par déshydrogénocondensation en présence d'acides de Lewis du type des dérivés de bore, sont utilisables pour la fabrication de revêtements anti-adhérents sur supports souples, notamment sur papier, ainsi que dans la fabrication de mousses silicones réticulées dans lesquelles le dégagement d'hydrogène et la qualité du réseau de réticulation sont contrôlés.

Il ressort de cette revue de l'état de la technique relative à la catalyse de déshydrogénocondensation entre un polyorganosiloxane à motif siloxyle ≡SiOH et un polyorganosiloxane à motif siloxyle =SiH, qu'il existe un besoin significatif pour:
1) trouver de nouveaux catalyseurs non toxiques,
2) diminuer la température d'activation du catalyseur, et
3) limiter les réactions secondaires.

Le demande FR 03 41232 concerne un procédé de préparation de polyorganosiloxane par polymérisation par ouverture de cycle(s) et/ou redistribution de polyorganosiloxane, en présence d'un catalyseur (ou amorceur) constitué par au moins un carbène nucléophile.

La demande FR 06 03563 concerne un procédé de polycondensation de polyorganosiloxane entre au moins un motif ≡SiOH et au moins un motif ≡SiOR utilisant également des catalyseurs à structure carbène.

Cependant, les catalyseurs carbènes decrits dans les deux demandes précitées, sont instables et doivent être en général soit utilisées sous une forme cristallisée, soit générés in-situ à partir de sels précurseurs. Or, les carbènes sont des espèces très réactives qui se dégradent à l'air libre ce qui implique de les conserver et de les manipuler sous atmosphère inerte.

Le document FR 2 856 690 décrit un procédé de déshydrogénocondensation en présence d'un catalyseur métallique à base d'iridium qui possède un ligand pouvant comprendre un carbène.

Ainsi, l'un des objectifs de la présente invention est de proposer une composition silicone comprenant des composants porteurs de groupements =SiH et ≡SiOH et polymérisable/réticulable par une réaction de déshydrogéno-condensation, en présence d'une nouvelle composition catalytique, stable à l'air libre pendant plusieurs mois et par conséquent facilement transportable ce qui permet une mise en oeuvre industrielle aisée sans nécessiter des étapes supplémentaires pour le générer in-situ.

Un autre objectif de la présente invention est de proposer un nouveau catalyseur non toxique pour la déshydrogéno-condensation des organopolysiloxanes porteurs de groupements ≡SiH et ≡SiOH, peu coûteux à synthéthiser car il ne présente pas les contraintes des catalyseurs à structure carbène de l'art antérieur, notamment liées à leur instabilité, et nécessitant une synthèse en milieu anhydre et/ou une étape de purification par sublimation avec de très faible rendements.

Un autre objectif de la présente invention est de fournir un procédé pour polymériser et/ou réticuler une composition du type de celle évoquée dans l'énoncé des objectifs ci-dessus ; ce procédé se devant d'être rapide économique et performant en termes de qualité de produit final obtenu.

Un autre objectif de l'invention est de fournir un procédé de réalisation d'au moins un revêtement sur un support (de préférence souple), consistant à utiliser le procédé de réticulation/polymérisation ou de la composition mentionnée supra.

Un autre objectif de l'invention est de fournir un procédé de réalisation d'au moins un article en mousse silicone réticulée, consistant à utiliser le procédé de réticulation/polymérisation susvisé et/ou la composition mentionnée supra dans les objectifs, ce procédé permettant de contrôler le volume d'hydrogène gazeux dégagé et la qualité de l'élastomère formé.

Il est entendu que le terme « élastomère » est pris dans le sens qu'il lui est donné

Pour atteindre cet objectif, la Demanderesse a eu le mérite de mettre en évidence, de manière tout à fait surprenante et inattendue, que l'utilisation de carbènes stables en solution alcoolique permettait de catalyser la réaction de déshydrgénoconsation des organopolysiloxanes, pour la réticulation des compositions élastomères, par exemple pour l'obtention de mastics ou de supports enduits ou de mousses silicones.

Ainsi, l'invention concerne tout d'abord une composition siloxanique **X,** polymérisable ou réticulable par déshydrogéno-condensation comprenant :
- au moins un monomère, oligomère et/ou polymère organosiloxane **B** ayant, par molécule, au moins un motif réactif≡SiH;
- au moins un monomère, oligomère et/ou polymère organosiloxane **C** présentant, par molécule, au moins un motif réactif ≡SiOH;
- une composition catalytique **Y'** comprenant :
   a) une quantité catalytiquement efficace d'au moins un catalyseur de polycondensation **A** qui est un carbène de formule (I) suivante: 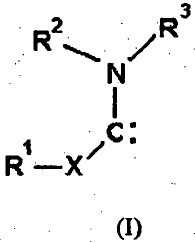 avec :
      - le symbole X étant choisi parmi le groupe constitué par les atomes ou groupements suivants : -O-, -S-, -N(R)- et -P(R)- avec R étant un groupement en C₁-C₃₀,
      - R¹, R² et R³ étant des groupements éventuellement substitués, identiques ou différents, en C₁-C₃₀ et comprenant éventuellement un ou plusieurs atomes choisi(s) parmi le groupe constitué par: S, P, Si, N et O, et
      - les symboles X, R¹, R² et R³ pris deux à deux peuvent former un cycle à 5, 6 ou 7 chainons, et
   b) au moins un solvant comprenant au moins un alcool **G.**
- éventuellement au moins une résine polyorganosiloxanique **D** ; et
- éventuellement au moins une charge **E.**

La composition catalytique **Y'** de polycondensation par déshydrogénocondensation utilisés conformément à l'invention est performante et économique, notamment au regard des catalyseurs platiniques.

Un des avantages des procédés de deshydrogénocondensation tels que revendiqués consiste à utiliser des compositions catalytiques **Y'** comprenant au moins un carbène qui est stable en solution à 20°C.

De préférence la composition catalytique est composé exclusivement d'un ou plusieurs alcool **G** et du catalyseur de polycondensation **A** selon l'invention. L'alcool **G** sera présent dans la composition catalytique **Y'** à raison d'au moins 50% poids par rapport au poids total de ladite composition catalytique **Y',** et de préférence d'au moins 55% poids et encore plus préférentiellement à raison d'au moins 60% poids par rapport au poids total de ladite composition catalytique **Y'**.

Des procédés de préparation de la composition catalytique **Y'** (carbènes stable en solution dans un solvant comprenant au moins un alcool **G**) sont décrits dans la demande de brevet FR 10 50108. Ces procédés consistent à préparer le carbène par déprotonation d'un sel précurseur à l'aide d'au moins une base forte éventuellement générée in situ, ladite déprotonation étant réalisée dans un solvant comprenant au moins un alcool.

Plus précisément, un procédé de préparation d'une composition catalytique **Y'** selon l'invention comprend les étapes suivantes:
a) on fait réagir, de préférence à une température comprise entre 0° C et 100° **C,** au moins une base forte, éventuellement générée in situ, avec au moins un composé **A'** précurseur du carbène de formule (I), ledit composé **A'** étant un sel comprenant une fonction iminium de structure (I') suivante: 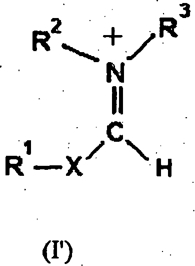 avec :
   - le symbole X étant choisi parmi le groupe constitué parles atomes ou groupements suivants: -O-, -S-, -N(R)- et -P(R)-, avec le symbole R étant un groupement en C₁-C₃₀,
   - les symboles R¹, R² et R³ étant des groupements éventuellement substitués, identiques ou différents, en C₁-C₃₀ et comprenant éventuellement un ou plusieurs atomes choisi(s) parmi le groupe constitué par : S, P, Si, N et O, et
   - les symboles X, R¹, R² et R³ pris deux à deux peuvent former un cycle à 5, 6 ou 7 chainons ;
avec comme conditions suivantes:
- le choix de la base forte s'effectue de manière à pouvoir effectuer une déprotonation de l'hydrogène de la fonction iminium de structure (I'), et
- la réaction s'effectue dans un solvant qui est un alcool ou un mélange d'alcool.

Avantageusement, cette déprotonation s'opère à température ambiante (20°C).

De préférence le composé **A**' est choisi parmi les composés de formule générale (III) ou (III') suivante : 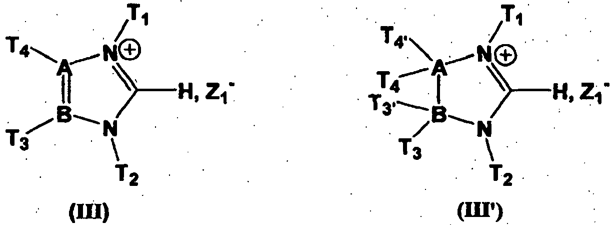 dans laquelle :
- Les symboles A et B représentent indépendamment un atome de carbone ou d'azote, étant entendu que :
   - dans la formule (III), lorsque le symbole A représente un atome d'azote, alors le symbole T₄ n'est pas présent et lorsque le symbole B représente un atome d'azote, alors le symbole T₃ n'est pas présent ;
   - dans la formule (III'), lorsque le symbole A représente un atome d'azote, alors le symbole T₄ ou T4' n'est pas présent et lorsque le symbole B représente un atome d'azote, alors le symbole T₃ ou T_{3'} n'est pas présent ;
- les symboles T₃, T_{3'}, T₄ et T_{4'} représentent, indépendamment les uns des autres, un atome d'hydrogène; un groupement : alkyle, cycloalkyle éventuellement substitué par un groupe alkyle ou alkoxy, aryle éventuellement substitué par un groupe alkyle ou alkoxy, alcényle, alcynyle ou arylalkyle dans lequel la partie aryle est éventuellement substituée par un groupe alkyle ou alkoxy ;
- les symboles T₃ et T₄ peuvent former ensemble et avec A et B un aryle quand ceux-ci représentent chacun un atome de carbone, étant entendu que dans ce cas T_{3'} et T_{4'} ne sont pas présents;
- les symboles T₁ et T₂ représentent indépendamment :
   1) un groupement : alkyle, cycloalkyle éventuellement substitué par un alkyle, alkyle perfluoré ou éventuellement substitué par un groupement perfluoroalkyle, cycloalkyle éventuellement substitué par un groupe alkyle ou alkoxy, aryle éventuellement substitué par un groupe alkyle ou alkoxy, alcényle, alcynyle ou arylalkyle dans lequel la partie aryle est éventuellement substituée par un groupe alkyle ou alkoxy ; ou
   2) un radical monovalent de formule (IV) suivante :

      -V1-V2 (IV)

      dans laquelle :
      - le symbole V1 est un groupement divalent hydrocarboné saturé ou non, de préférence un alkylène linéaire ou ramifié en C₁-C₁₀, éventuellement substitué,
      - le symbole V2 est un groupement monovalent choisi dans le groupe des substituants suivants :
         ◆ alcoxy, -OR^{a} avec le symbole R^{a} correspondant à un atome d'hydrogène ou un groupement alkyle ou aryle ;
         ◆ silyl, -Si(OR^{b})ₓ(R^{c})₃₋ₓ avec le symbole R^{b} correspondant à un atome d'hydrogène, ou un groupement alkyle, silyle ou siloxanyle, le symbole R^{c} correspondant à un groupement alkyle, aryle et le symbole x étant un entier égal à 0, 1, 2 ou 3;
         ◆ amine, de préférence -N(R^{a})₂ avec le symbole R^{a} correspondant à un atome d'hydrogène ou un groupement alkyle ou aryle ;
            - les substituants T₁, T₂, T₃, T_{3'}, T₄ et T_{4'} peuvent former deux à deux, lorsqu'ils sont situés sur deux sommets adjacents dans les formules (III) et (III'), une chaîne hydrocarbonée saturée ou insaturée,
- le symbole Z₁ représente indépendamment un anion dérivé d'un acide de Brönsted (acide protique) de préférence choisi dans le groupe constitué par:
   - les acides carboxyliques de formule G°-COOH dans laquelle le symbole G° représente un alkyle, et avantageusement un alkyle en C₁-C₂₂ ; un aryle, avantageusement un aryle en C₆-C₁₈ éventuellement substitué par un ou plusieurs alkyle en C₁-C₆ ;
   - les acides sulfoniques de formule G°-SO₃H dans laquelle le symbole G° est tel que défini ci-dessus ;
   - les acides phosphoriques de formule Gₒ-PO₃H dans laquelle le symbole Gₒ est tel que défini ci-dessus ;
   - les acides minéraux suivants: HF, HCl, HBr, HI, H₂SO₄, H₃PO₄, HClO₄ et HBF₄ pris à eux seuls ou en combinaison entre eux ;
   - et leurs mélanges.

Concernant le sel **(III)**, l'anion Z₁⁻ est l'anion dérivé d'un acide de Brônsted (acide protique) organique ou minéral. Habituellement, l'anion Z₁⁻ est dérivé d'un acide présentant un pKa inférieur à 6. De préférence, Z₁⁻ dérive d'un acide de pKa inférieur à 4, mieux encore inférieur à 2. Les pKa dont il est question ici sont les pKa des acides tels que mesurés dans l'eau.

Des exemples d'acides sont les acides carboxyliques de formule:G°-COOH, dans laquelle le symbole G° représente un groupement : alkyle, par exemple en C₁ à C₂₂; aryle, par exemple en C₆ à C₁₈, éventuellement substitué par un ou plusieurs alkyle, de préférence un ou plusieurs (C₁-C₆)alkyle ; les acides sulfoniques de formule : G°-SO₃H, dans laquelle le symbole G° est tel que défini ci-dessus ; et les acides phosphoniques de formule : G°-PO₃H dans laquelle le symbole G° est tel que défini ci-dessus ; d'autres acides sont HF, HCl, HBr, HI, H₂SO₄, H₃PO₄, HClO₄ et HBF₄.

Des exemples préférés d'acides carboxyliques sont l'acide acétique, l'acide benzoïque, et l'acide stéarique. A titre d'acide sulfonique préféré, on citera l'acide benzène sulfonique et à titre d'acide phosphonique préféré, on mentionnera l'acide phénylphosphonique.

On préfère plus particulièrement les anions Z₁⁻ dérivés des acides HCl, HI et HBF₄ et HPF₆.

Ainsi, des anions Z₁⁻ particulièrement préférés, sont les anions halogénure et le tétrafluoroborate et hexafluorophosphate.

On donne ci-dessous quelques exemples de sels d'imidazolium.

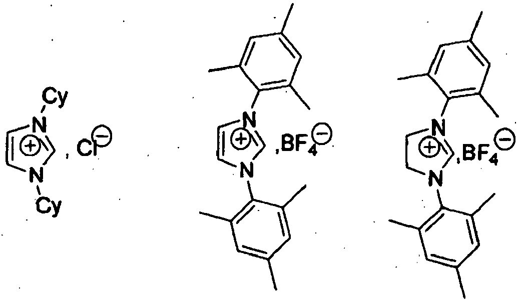

Ces consommables sont soit disponibles dans le commerce, soit facilement préparés par l'homme du métier à partir de composés commerciaux.

Une méthode de synthèse des sels de formule (III) dans laquelle A = B = C est décrite dans US-B-5 077 414.

Ce procédé comprend la réaction :
⇒ d'un composé α-dicarbonylé de formule **(V)** suivante : 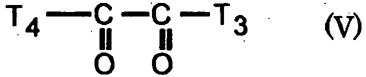 dans laquelle les symboles T₃ et T₄ sont tels que définis ci-dessus
   ⇒ avec HCHO et deux amines de formules T₁-NH₂ et T₂-NH₂, en présence d'un acide approprié. Les symboles T₁ et T₂ sont tels que définis ci-dessus.

La nature de l'anion Z1 dans les sels de formule **(III)** dépend de l'acide utilisé à cette étape. Les acides utilisables sont par exemple ceux énumérés ci-dessus et ceux dont dérive Z1.

D'autres méthodes de préparation des sels de formule **(III)** sont proposées dans Chem. Eur. J. 1996, 2, n° 12, pages 1627-1636 et Angew. Chem. Int. Ed. Engl. 1997, 36, 2162-2187.

La réaction pour la préparation des carbènes utilisés comme catalyseurs s'effectue dans un solvant comprenant au moins un alcool **G** ou mélange d'alcool **G** de sorte à obtenir des carbènes stables dans une composition ou solution à base d'alcool.

De préférence, l'alcool **G** présent dans ce solvant répond à la formule R°OH, dans laquelle R° correspond à un groupement : alkyle, cycloalkyle, aryle, alcényle, alcynyle, arylalkyle, silyle ou siloxane, et de préférence le symbole R° est choisi parmi le groupe constitué par: un méthyle, un éthyle, un propyle et un butyle.

Dans un mode de réalisation préféré pour la réaction de synthèse des carbènes en solution, la base forte est choisie dans le groupe des hydroxydes, des alcoolates, des hydrures ou des amidures alcalins ou alcalinoterreux, de préférence dans le sous-groupe comprenant : CH₃ONa, tertiobutylate de potassium, KOH, NaOH, CH₃CH₂OMgOCH₂CH₃ et leurs mélanges.

Selon une éventualité, cette base forte peut se former in situ, par exemple par ajout de sodium, ou d'hydrure de sodium, ou de magnésium dans l'alcool considéré. C'est ainsi que les alcoolates pouvant être générés in situ.

Avantageusement, la déprotonation produit un sel qui précipite et que l'on sépare de la solution de carbènes, ladite solution étant alors utilisable dans les procédés de l'invention décrits ci-après comme composition catalytique **Y'**.

De préférence, la composition catalytique **Y'** selon l'invention comprend un catalyseur de polycondensation **A** avant pour formule (II) ou (II') : 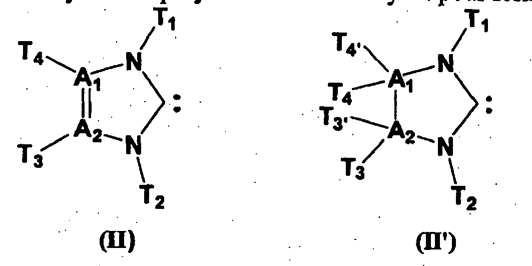 dans lesquelles :
- les symboles A₁ et A₂ représentent indépendamment un atome de carbone ou d'azote, étant entendu que:
   1) dans la formule (II), lorsque le symbole A₁ représente un atome d'azote, alors le symbole T₄ n'est pas présent et lorsque le symbole A₂ représente un atome d'azote, alors le symbole T₃ n'est pas présent; et
   2) dans la formule (II'), lorsque le symbole A₁ représente un atome d'azote, alors le symbole T₄ ou T_{4'} n'est pas présent et lorsque le symbole A₂ représente un atome d'azote N, alors le symbole T₃ ou T_{3'} n'est pas présent ;
- les symboles T₃, T_{3'}, T₄ et T_{4'} représentent indépendamment un atome d'hydrogène ; un groupement : alkyle, cycloalkyle éventuellement substitué par un groupe alkyle ou alkoxy; aryle éventuellement substitué par un groupe alkyle ou alkoxy, alcényle, alcynyle ou arylalkyle dans lequel la partie aryle est éventuellement substituée par un groupe alkyle ou alkoxy ;
- les symboles T₃ et T₄ peuvent former ensemble et avec A₁ et A₂ quand ceux-ci représentent chacun un atome de carbone, un aryle étant entendu que dans ce cas T_{3'} et T_{4'} ne sont pas présents;
- les symboles T₁, T₂, T₃, T_{3'}, T₄ et T_{4'} peuvent former deux à deux, lorsqu'ils sont situés sur deux sommets adjacents dans les formules (II) et (II'), une chaîne hydrocarbonée saturée ou insaturée, et
- les symboles T₁ et T₂ représentent indépendamment l'un de l'autre:
   1) un groupement : alkyle, un cycloalkyle éventuellement substitué par un groupe alkyle, alkyle perfluoré ou éventuellement substitué par un groupement perfluoroalkyle, cycloalkyle éventuellement substitué par un groupe alkyle ou alkoxy; aryle éventuellement substitué par un groupe alkyle ou alkoxy, alcényle, alcynyle ou arylalkyle dans lequel la partie aryle est éventuellement substituée par un groupe alkyle ou alkoxy ; ou
   2) un radical monovalent de formule (IV) suivante :

      -V1-V2 (IV)

      dans laquelle:
      - V1 est un groupement divalent hydrocarboné saturé ou non, de préférence un alkylène linéaire ou ramifié en C₁-C₁₀, éventuellement substitué, et
      - V2 est un groupement monovalent choisi dans le groupe constitué par les substituants suivants :
      - alcoxy, -OR^{a} avec le symbole R^{a} correspondant à un atome d'hydrogène ou un groupement alkyle ou aryle ;
      - silyl, -Si(OR^{b})ₓ(R^{c})₃₋ₓ avec le symbole R^{b} correspondant à un atome d'hydrogène, un groupement alkyle, silyle ou siloxanyle, avec le symbole R^{c} correspondant à un groupe alkyle ou aryle et le symbole x étant un nombre entier égal à 0, 1, 2 ou 3; et
      - amine de préférence -N(R^{a})₂ avec le symbole R^{a} correspondant à un atome d'hydrogène ou à un groupement alkyle ou aryle.

Par alkyle, on désigne une chaîne hydrocarbonée saturée, linéaire ou ramifiée, éventuellement substituée (e.g. par un ou plusieurs alkyles), de préférence de 1 à 10 atomes de carbone, par exemple de 1 à 8 atomes de carbone, mieux encore de 1 à 7 atomes de carbone.

Des exemples de groupements alkyle sont notamment méthyle, éthyle, isopropyle, n-propyle, tert-butyle, isobutyle, n-butyle, n-pentyle, isoamyle et 1,1-diméthylpropyle. La partie alkyle du groupement alcoxy est telle que définie ci-dessus.

Le groupement alkyle perfluoré ou éventuellement substitué par un groupement perfluoroalkyle correspond, de préférence, à la formule :

**-(CH₂)ₚ₋C_{q}F_{2q+1}**

dans laquelle p représente 0, 1, 2, 3 ou 4 ; q est un entier de 1 à 10 ; et C_{q}F_{2q+1} est linéaire ou ramifié. Des exemples préférés de ce groupement sont : -(CH₂)₂-(CF₂)₅-CF₃ et -(CF₂)₇-CF₃.

L'expression aryle désigne un groupement hydrocarboné aromatique, ayant de 6 à 18 atomes de carbone, monocyclique ou polycyclique et de préférence monocyclique ou bicyclique. Il doit être entendu que, dans le cadre de l'invention, par groupement aromatique polycyclique, on entend un groupement présentant deux ou plusieurs noyaux aromatiques, condensés (orthocondensés ou ortho et péricondensés) les uns aux autres, c'est-à-dire présentant, deux à deux, au moins deux carbones en commun.

Ledit groupement hydrocarboné aromatique ("aryle") est éventuellement substitué par exemple par un ou plusieurs alkyles en C₁-C₃, un ou plusieurs groupements hydrocarbonés halogénés (e.g. CF₃), un ou plusieurs alcoxy (e.g. CH₃O) ou un ou plusieurs groupements hydrocarbonés comprenant un ou plusieurs motifs cétone (e.g. CH₃CO-).

A titre d'exemple d'aryle, on peut mentionner les radicaux phényle, naphtyle, anthryle et phénanthryle.

L'expression arylalkyle désigne un groupement alkyle tel que défini ci-dessus, substitué par un ou plusieurs groupements aryle sur sa chaîne hydrocarbonée, le groupement aryle étant tel que défini ci-dessus. Des exemples en sont benzyle et triphénylméthyle.

Par cycloalkyle, on entend un groupement hydrocarboné saturé mono- ou polycyclique, de préférence mono- ou bicyclique, présentant préférablement de 3 à 10 atomes de carbone, mieux encore de 3 à 8. Par groupement hydrocarboné saturé polycyclique, on entend un groupement présentant deux ou plusieurs noyaux cycliques rattachés les uns aux autres par des liaisons σ ou/et condensés deux à deux. Des exemples de groupements cycloalkyle polycycliques sont adamantane et norbornane. Des exemples de groupements cycloalkyle monocycliques sont cyclopropyle, cyclobutyle, cyclopentyle, cyclohexyle, cycloheptyle et cyclooctyle.

Par alcényle, on entend une chaîne hydrocarbonée insaturée, linéaire ou ramifiée, substituée ou non, présentant au moins une double liaison oléfinique, et plus préférablement une seule double liaison. De préférence, le groupement alcényle présente de 2 à 8 atomes de carbone, mieux encore de 2 à 6. Cette chaîne hydrocarbonée comprend éventuellement au moins un hétéroatome tel que O, N, S. Des exemples préférés de groupements alcényle sont les groupements allyle et homoallyle.

Par alcynyle, on entend selon l'invention, une chaîne hydrocarbonée insaturée, linéaire ou ramifiée, substituée ou non, présentant au moins une triple liaison acétylénique, et plus préférablement une seule triple liaison. De préférence, le groupement alcynyle présente de 2 à 8 atomes de carbone, mieux encore de 2 à 6 atomes de carbone. A titre d'exemple, on peut citer le groupement acétylényle, ainsi que le groupement propargyle. Cette chaîne hydrocarbonée comprend éventuellement au moins un hétéroatome tel que O, N, S.

Par silyle, on entend selon l'invention, un groupement linéaire ou ramifié contenant au moins un atome de silicium. Les chaînes polydiméthylsiloxane sont des exemples de groupements silyle.

Les carbènes de formule **(II)** et **(II')** peuvent présenter au moins deux noyaux condensés, c'est-à-dire que deux groupements au moins parmi T₁, T₂, T₃, T_{3'}, T₄ et T_{4'} situés sur deux sommets adjacents, forment ensemble une chaîne hydrocarbonée saturée ou insaturée, présentant de préférence de 3 à 6 atomes de carbones. Par chaîne hydrocarbonée saturée ou insaturée, on entend une chaîne hydrocarbonée linéaire ou ramifiée pouvant présenter ou non une ou plusieurs insaturations de type double liaison oléfinique ou triple liaison acétylénique.

Concernant les formes préférées de réalisation dans les formules (II) ou (II'), ce sont des formes dans lesquelles A₁ = A₂ = atome de carbone dans la formule (II) donnée supra.

Des significations préférées pour les symboles T₁ et T₂ dans cette formule (II) sont :
- alkyle, en particulier n-propyle, n-pentyle, néo-pentyle (-CH₂-C(CH₃)₃) ;
- cycloalkyle, en particulier cyclopentyle, cyclohexyle ou adamantyle ;
- alcényle, en particulier allyle (-CH₂-CH=CH₂), méthallyle (-CH₂-C(CH₃)=CH₂) ;
- alcynyle, en particulier propargyle, homopropargyle (-(CH₂)₂₋C≡CH) ;
- ou groupement monovalent (V) défini supra, en particulier :

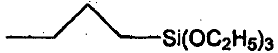

Toujours dans la formule **(II)** et de préférence, les symboles T₃ et T₄ correspondent tous deux à l'hydrogène ou forment ensemble un aryle, et mieux encore un phényle.

A titre d'exemples de carbènes, on peut citer ceux décrits dans le tableau 2, page 48 de la publication "Bourissou et al. Chem. Rev. 2000, 100, 39-91".

La quantité de catalyseur de polycondensation **A** selon l'invention peut être comprise entre 0,1 et 10 % en poids de la masse totale de la composition **X** selon l'invention, de préférence entre 0,1 et 5 % poids.

Un autre objet de l'invention consiste en l'utilisation d'au moins une composition catalytique **Y'** selon l'invention et telle que définie dans la présente demande pour la déshydrogénocondensation entre, d'une part, au moins un monomère, oligomère et/ou polymère organosiloxane **B** ayant, par molécule, au moins un motif réactif ≡SiH et, d'autre part, au moins un monomère, oligomère et/ou polymère organosiloxane C présentant, par molécule, au moins un motif réactif ≡SiOH.

De manière préférentielle, les monomères, oligomères et/ou polymères organosiloxanes **B** à motifs réactifs ≡SiH possèdent au moins un motif de formule **(VIII)** et sont terminés par des motifs de formule **(IX)** ou sont des cycliques constitués de motifs de formule **(VIII)** représentées ci-dessous : 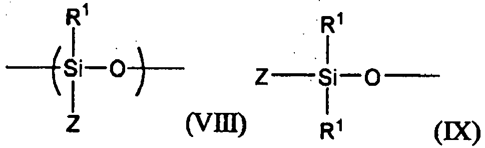 dans lesquelles :
- les symboles R¹, identiques ou différents et représentent :
   - un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoiopropyle,
   - un radical cycloalkyle contenant entre 5 et 8 atomes de carbone cycliques, éventuellement substitué,
   - un radical aryle contenant entre 6 et 12 atomes de carbone éventuellement substitué, ou
   - une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alcoxyles contenant 1 à 3 atomes de carbone,
- les symboles Z sont semblables ou différents et représentent :
   - un radical hydrogène, ou
   - un groupement R¹ avec la condition qu'il y a par molécule, au moins deux symboles Z représentent un atome d'hydrogène.

Selon un mode de réalisation préférentiel, les monomères, oligomères et/ou polymères organosiloxanes **C** -à motifs réactifs ≡SiOH possèdent au moins un motif de formule **(IV)** et sont terminés par des motifs de formule **(V),** ou cycliques constitués de motifs de formule **(IV)** représentées ci-dessous : 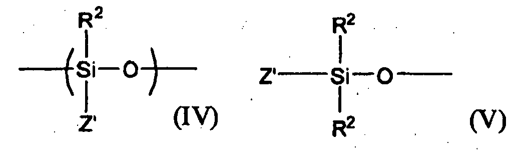 dans lesquelles :
- les symboles R², identiques ou différents et représentent :
   - un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   - un radical cycloalkyle contenant entre 5 et 8 atomes de carbone cycliques, éventuellement substitué,
   - un radical aryle contenant entre 6 et 12 atomes de carbone éventuellement substitué, ou
   - une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alcoxyles contenant 1 à 3 atomes de carbone, et
- les symboles Z' sont semblables ou différents et représentent :
   ▪ un groupement hydroxyle, ou
   ▪ un groupement R² avec la condition que par molécule, au moins deux symboles Z représentant un groupement hydroxyle -OH.

Les espèces de type **B** et **C** peuvent également inclure dans leur structure des motifs dits (Q) ou (T) définis comme indiqué ci-après : 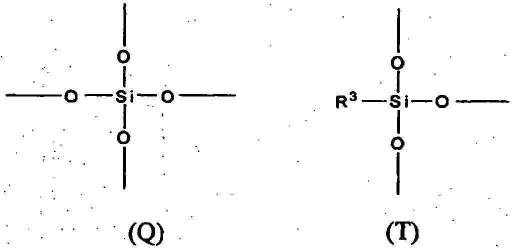 avec R³ pouvant représenter l'un des substituants proposés pour R¹ou R².

Selon une variante avantageuse de l'invention, les polyorganosiloxanes **B** utilisés comportent de 1 à 50 motif(s) siloxyle(s) =SiH par molécule.

Selon une variante avantageuse de l'invention, les polyorganosiloxanes C utilisés comportent de 1 à 50 motifs siloxyle(s) ≡SiOH par molécule.

Sont notamment préférés à titre de dérivés **B** les monomères, oligomères, polymères organosiloxanes **B** à motif réactif≡SiH répondent à la formule générale **(VI)** : 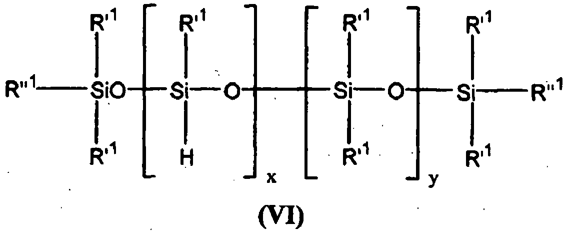 dans laquelle :
- x et y représentent chacun un nombre entier ou fractionnaire variant entre 0 et 200
- R'¹ et R"¹ représentent indépendamment l'un de l'autre :
   - un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   - un radical cycloalkyle contenant entre 5 et 8 atomes de carbone cycliques, éventuellement substitué,
   - un radical aryle contenant entre 6 et 12 atomes de carbone éventuellement substitué, ou
   - une partie aralkyle ayant une partie alkyle contenant entre 5 et 14 atomes de carbone et une partie aryle contenant entre 6 et 12 atomes de carbone, substituée éventuellement-sur la partie aryle, et
- R"¹ pouvant également correspondre à l'hydrogène, avec la condition salon laquelle que les radicaux R"¹ correspondent à l'hydrogène quand x = 0.

Sont notamment préférés à titre de dérivés C les monomères, oligomères, polymères organosiloxanes C à motif réactif ≡SiOH répondent à la formule générale **(VII)** : 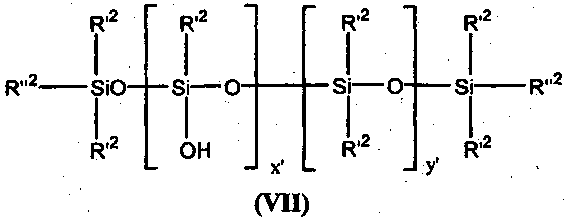 dans laquelle :
- x' et y' représente chacun un nombre entier ou fractionnaire variant entre 0 et 1200,
- R'² et R"² représentent indépendamment l'un de l'autre :
   - n radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   - un radical cycloalkyle contenant entre 5 et 8 atomes de carbone cycliques, éventuellement substitué,
   - un radical aryle contenant entre 6 et 12 atomes de carbone éventuellement substitué, ou
   - une partie aralkyle ayant une partie alkyle contenant entre 5 et 14 atomes de carbone et une partie aryle contenant entre 6 et 12 atomes de carbone, substituée éventuellement-sur la partie aryle,
- R"² pouvant également correspondre à OH, avec la condition selon laquelle les radicaux R"² correspondent à OH quand x' = 0.

Conviennent tout particulièrement à l'invention à titre de dérivés de silicone **B** les composés suivants : 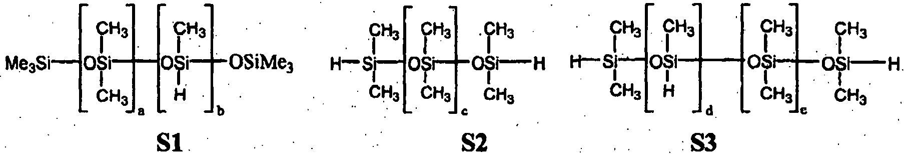 avec a, b, c, d et e représentant un nombre variant de :
- dans le polymère de formule **S1** :
   0 ≤ a ≤ 150 de préférence 0 ≤ a ≤ 100 de préférence 0 ≤ a ≤ 20
      et
   1 ≤ b ≤ 55 de préférence 10 ≤ b ≤ 55 de préférence 30 ≤ b ≤ 55
- dans le polymère de formule **S2** :
   0 ≤ c ≤ 15
- dans le polymère de formule **S3** :
   5 ≤ d ≤ 200 de préférence 20 ≤ d ≤ 50
      et
   2 ≤ e ≤ 50 de préférence 10 ≤ e ≤ 30.

Conviennent tout particulièrement à l'invention à titre de dérivés de silicone **C** les composés de formule **S4** suivante: 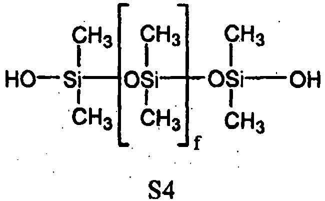 avec 1 ≤ f ≤ 1200 de préférence 50 ≤ f ≤ 400, et plus préférentiellement encore 150 ≤ f ≤ 250.

Dès lors que les espèces siloxaniques **B** et **C** sont des oligomères, des polymères, ils peuvent être décrits comme indiqué ci-après.

Le polyorganosiloxane **B** peut être linéaire (e.g. (VII)), ramifié ou cyclique. Pour des raisons économiques, sa viscosité est de préférence inférieure à 100 mPa.s; les radicaux organiques identiques ou différents sont de préférence méthyle, éthyle et/ou phényle. Lorsque celui-ci est linéaire, les atomes d'hydrogène des fonctions ≡SiH sont liés directement aux atomes de silicium situés en bout(s) de chaîne et/ou dans la chaîne.

A titre d'exemple de constituant **B** linéaire, on peut citer les polyméthylhy-drogénosiloxanes à extrémités triméthylsiloxyl et/ou hydrogénodiméthylsiloxy.

Parmi les polymères cycliques, peuvent être cités ceux répondant aux formules suivantes :

[OSi(CH₃)H]₄; [OSi(CH₃)H]₅; [OSi(CH₃)H]₃; [OSi(CH₃)H]₈; [OSi(C₂H₅)H]₃.

Le constituant **C** peut présenter une viscosité pouvant atteindre 200 000 mPa.s. Pour des raisons économiques, on choisit un constituant dont la viscosité est généralement de l'ordre de 20 à 10 000 mPa.s.

Les groupes organiques identiques ou différents généralement présents dans les constituants **C,** huiles ou gommes α,ω-hydroxylées, sont les radicaux méthyle, éthyle, phényle, trifluoropropyle. De préférence, au moins 80 % en nombre desdits groupes organiques sont des groupes méthyles liés directement aux atomes de silicium. Dans le cadre de la présente invention, on préfère plus spécialement les α,ω-bis (hydroxy)polydiméthylsiloxanes.

Le polyorganosilxane **C** peut-être une résine. Les résines **C** à fonctions silanol présentent par molécule au moins un des motifs R'SiO_{1/2}(motif M) et R'²SiO_{2/2} (motif D), en association avec au moins un des motifs R'SiO_{3/2} (motif T) et SiO_{4/2} (motif Q). Les radicaux R' généralement présents sont méthyle, éthyle, isopropyle, tertio-butyle et n-hexyle. Comme exemples de résines, on peut citer les résines MQ^{(OH)}, MDQ^{(OH)}, TD^{(OH)} et MDT^{(OH)}.

Il est possible de mettre en oeuvre des solvants des polyorganosiloxanes **B** ou **C** de façon à régler la viscosité de la composition. A titre d'exemples de tels solvants classiques de polymères silicones, on peut citer les solvants de type aromatique tels que xylène et toluène, les solvants alphatiques saturés tels que hexane, heptane, white-spirit®, tétrahydrofurane et diéthyléther, les solvants chlorés tels que chlorure de méthylène et perchloroéthylène. Dans le cadre de la présente invention, on préférera toutefois ne pas utiliser de solvant.

Le ratio molaire ≡SiH/≡SiOH est avantageusement compris entre 1 et 100, de préférence entre 10 et 50 et, plus préférentiellement encore entre 15 et 45.

La composition selon l'invention peut également comprendre une ou plusieurs résines polyorganosiloxanes **D.** Ces résines sont des oligomères ou polymères polyorganosiloxanes ramifiés bien connus et disponibles dans le commerce. Elles sont présentes sous la forme de solutions, de préférence siloxaniques. Elles présentent, dans leur structure, au moins deux motifs différents choisis parmi ceux de formule:
R'₃SiO_{1/2} (motif M), R'₂SiO_{2/2} (motif D), R'SiO_{3/2} (motif T) et SiO_{4/2} (motif Q), avec l'un au moins de ces motifs étant un motif T ou Q.

Les radicaux R' sont identiques ou différents et sont choisis parmi les radicaux alkyles linéaires ou ramifiés en C₁-C₆, les radicaux alcényles en C₂-C₄phényle ou trifluoro-3,3,3 propyle.

On peut citer par exemple : comme radicaux R' alkyles, les radicaux méthyle, éthyle, isopropyle, tertiobutyle et n-hexyle, et comme radicaux R alcényles, les radicaux vinyles.

On doit comprendre que dans les résines polyorganosiloxanes **D** du type précité, une partie des radicaux R' sont des radicaux alcényles.

Comme exemples d'oligomères ou de polymères organopolysiloxanes ramifiés **D,** on peut citer les résines MQ, les résines MDQ, les résines TD et les résines MDT, les fonctions alcényles pouvant être portées par les motifs M, D et/ou T. Comme exemples de résines -E- qui conviennent particulièrement bien, on peut citer les résines MDQ ou MQ vinylées ayant une teneur pondérale en groupes vinyle comprise entre 0,2 et 10 % en poids, ces groupes vinyle étant portés par les motifs M et/ou D.

Cette résine **D** est avantageusement présente dans une concentration comprise entre 5 et 70 % en poids par rapport à l'ensemble des constituants de la composition, de préférence entre 10 et 60 % en poids et, plus préférentiellement encore, entre 20 et⁻60 % en poids.

La composition selon l'invention peut également contenir une charge **E** de préférence minérale et choisie parmi les matières siliceuses ou non. Quand il s'agit de matières siliceuses, elles peuvent jouer le rôle de charge renforçante ou semi-renforçante. Les charges siliceuses renforçantes sont choisies parmi les silices colloïdales, les poudres de silice de combustion et de précipitation ou leur mélange.

Ces poudres présentent une taille moyenne de particule généralement inférieure à 0,1 µm et une surface spécifique BET supérieure à 50 m²/g, de préférence comprise entre 100 et 300 m²/g.

Les charges siliceuses semi-renforçantes telles que des terres de diatomées ou du quartz broyé, peuvent être également employées.

En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, le zircone, un zirconate, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,001 et 300 µm et une surface BET inférieure à 100 m²/g.

De façon pratique mais non limitative, la charge employée est une silice.

La charge peut être traitée à l'aide de tout agent de compatibilisation approprié et notamment l'hexaméthyldisilazane. Pour plus de détails à cet égard, on peut se référer par exemple au brevet FR-B-2 764 894.

Sur le plan pondéral, on préfère mettre en oeuvre une quantité de charge comprise entre 5 et 30% et de préférence entre 7 et 20 % en poids par rapport à l'ensemble des constituants de la préparation.

Naturellement, la composition peut être enrichie à l'aide de toutes sortes d'additifs selon les applications finales visées.

Dans l'application anti-adhérence sur supports souples (papier ou film polymère), la composition peut comprendre un système modulateur d'adhérence sélectionné parmi les systèmes connus. Il peut s'agir de ceux décrits dans le brevet français FR-B-2 450 642, le brevet US-B-3,772,247 ou la demande de brevet européen EP-A-0 601 938.

D'autres additifs fonctionnels de cette composition, peuvent être des bactéricides, des photosensibilisateurs, des fongicides, des inhibiteurs de corrosion, des agents antigels, des agents de mouillage, des antimousses, des latex synthétiques, des colorants ou des acidifiants.

Parmi les additifs classiques, on peut citer également les promoteurs d'adhérents tels que par exemple ceux comprenant au moins un organosilane alcoxylé, au moins un composé organosilicié époxydé, et au moins un chélate de métal et/ou un alcoxyde métallique par exemple
- Vinyle TriMéthoxySilane ou VTMO
- GLYcidoxypropyltriMéthOxysilane) ou GLYMO, et
- titanate de tertiobutyle ou TBOT.

Cette composition peut être une solution ou une émulsion. Dans ce dernier cas, elle peut comporter alors au moins un tensioactif et éventuellement au moins un agent de fixation du pH tel que HCO₃⁻/CO₃²⁻ et/ou H₂PO₄⁻/HPO₄²⁻.

Selon un autre de ses aspects, la présente invention concerne un procédé pour polymériser et/ou réticuler une composition siloxanique **X** selon l'invention et telle que définie ci-dessus caractérisé en ce que l'on effectue une réaction de déshydrogénocondensation entre lesdits composés **B** et **C** et en ce que ladite déshydrogénocondensation est initiée par la composition catalytique **Y'** telle que défini ci-dessus.

Deux modes de réalisation au moins sont possibles pour l'ajout du catalyseur.

Celui-ci peut par exemple être ajouté au mélange des composés **B** et **C,** par exemple des polymères du type S1, S2 ou S3 avec un polymère du type S4, soit, de préférence, être au préalable mélangé avec le composé **C**, par exemple le polymère du type S4, avant d'être mis en présence du composé **B,** par exemple le polymère S1 ou S2 ou S3.

Quelle que soit la variante considérée, le catalyseur est de préférence mis en oeuvre en solution dans un solvant comprenant au moins un alcool.

Généralement, les mélanges sont réalisés sous agitation à température ambiante.

La solution de catalyseur peut par exemple être utilisée pour préparer un bain avec le ou les monomères, oligomères et/ou polymères à polymériser et/ou réticuler par déshydrogénocondensation, de manière à ce que la concentration du ou des catalyseurs présents soit comprise entre 0,01 et 5% en poids dans ledit bain, et de préférence entre 0,05 et 0,5%.

La préparation de la composition silicone selon l'invention, utilisable notamment comme base d'enduction pour la réalisation de revêtements à caractère hydrofuge s'effectue à l'aide des moyens et selon les méthodologies de mélanges bien connues de l'homme de l'art qu'il s'agisse de compositions avec ou sans solvants ou d'émulsions.

L'invention concerne également un procédé de réalisation d'au moins un revêtement sur un support, de préférence souple, caractérisé en ce qu'il consiste essentiellement à appliquer sur ce support une composition siloxanique **X** selon l'invention et telle que définie ci-dessus, puis à laisser réticuler la composition siloxanique **X** éventuellement après activation thermique à une température d'au moins 50°C et de préférence comprise entre 50°C et 130°C, par exemple jusqu'à une température d'au moins 110°C, et ne dépassant pas 130°C.

Conformément à ce procédé, les compositions peuvent être appliquées à l'aide de dispositifs utilisés sur les machines industrielles d'enduction du papier tels qu'une tête d'enduction à cinq rouleaux, des systèmes à lames d'air ou à barre égalisatrice, sur des supports ou matériaux souples, puis durcies par circulation dans des fours-tunnels chauffés à une température comprise entre 50 et 130°C et par exemple entre 100 et 110°C.

Lesdites compositions peuvent être déposées sur tout matériau ou substrat souple tel que papiers de types divers (supercalendré, couché, glassine), cartons, feuilles de cellulose, feuilles en métal, films de matière plastique (polyester, polyéthylène, polypropylène...).

Les quantités de compositions déposées sont de l'ordre de 0,5 à 2 g par m² de surface à traiter, ce qui correspond au dépôt de couches de l'ordre de 0,5 à 2 µm.

Les matériaux ou supports ainsi enduits peuvent ultérieurement être mis en contact avec des matières adhésives quelconques caoutchoucs, acryliques ou autres, sensibles à la pression. La matière adhésive est alors aisément détachable dudit support ou matériau.

Les supports souples revêtus d'un film silicone anti-adhérent peuvent être par exemple:
- un ruban adhésif dont la face interne est enduite d'une couche d'adhésif sensible à la pression et dont la face externe comporte le revêtement silicone anti-adhérent ;
- ou un papier ou un film polymère de protection de la face adhésive d'un élément autocollant ou adhésif sensible à la pression ;
- ou un film polymère du type polychlorure de vinyle (PVC), Polypropylène, Polyéthylène ou Polyéthylènetéréphtalate.

Un autre objet de l'invention concerne un procédé de réalisation d'au moins un article en mousse silicone réticulée, caractérisé en ce qu'il consiste essentiellement à faire réticuler une composition telle que définie ci-dessus, en mettant en oeuvre de préférence des organosiloxanes **B** et **C** tels que définis ci-dessus, dans des conditions de contrôle de la réaction permettant la formation d'une mousse silicone.

Les compositions selon l'invention sont utiles dans le domaine des revêtements anti-adhérents sur les peintures, de l'encapsulation de composants électriques et électroniques, des revêtements pour textiles, ainsi que dans le domaine du gainage de fibres optiques.

L'invention a également pour objet tous revêtements obtenus par réticulation et/ou polymérisation de la composition siloxanique **X** selon l'invention et telle que définie ci-dessus. Ces revêtements peuvent être de type vernis, revêtement adhésif, revêtement anti-adhérent et/ou encre.

L'invention vise également :
- tous articles constitués d'un matériau solide dont une surface au moins est revêtue de la composition siloxanique **X** susvisée réticulée et/ou polymérisée thermiquement ;
- ainsi que la mousse silicone réticulée obtenue par réticulation d'une composition siloxanique **X** susvisé.

### EXEMPLES

### Exemple 1 :

On mélange sous agitation magnétique 4g d'une huile polydiméthylsiloxane α,ω-dihydroxylée de viscosité 100 mPa.s avec 0.2 g d'huile MD'ₙM de viscosité comprise entre 20 et 25 mPa.s. Le ratio molaire SiH/SiOH est égal à 1,4. On rajoute en une fois 0.05 mmol de carbène NHC-Cy₂ [1,3-(dicyclohexyl)imidazolytydène] sous forme de solution éthanolique (40% poids de carbène NHC-Cy₂ dans l'éthanol) en une fois. En moins d'une minute, le mélange conduit à une mousse de volume 4 fois le volume initial.
Le motif siloxyle M=(CH₃)SiO_{1/2}
Le motif siloxyle D'= (CH₃)(H)SiO_{2/2}

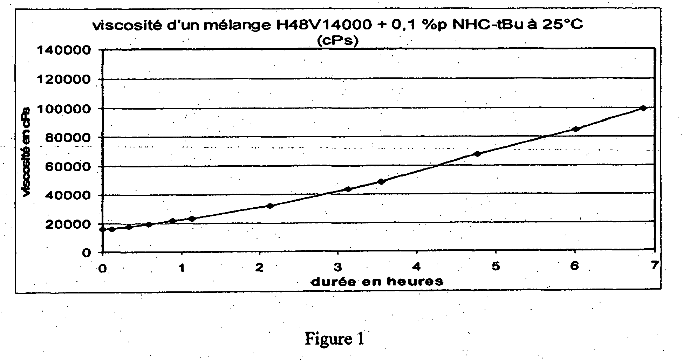

## Revendications

1. - Composition siloxanique **X,** polymérisable ou réticulable par déshydrogéno-condensation comprenant :
- au moins un monomère, oligomère et/ou polymère organosiloxane **B** ayant, par molécule, au moins un motif réactif ≡SiH ;
- au moins un monomère, oligomère et/ou polymère organosiloxane **C** présentant, par molécule, au moins un motif réactif ≡SiOH ;
- une composition catalytique **Y'** comprenant :
a) une quantité catalytiquement efficace d'au moins un catalyseur de polycondensation A qui est un carbène de formule (I) suivante: 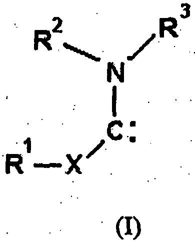 avec :
- le symbole X étant choisi parmi le groupe constitué par les atomes ou groupements suivants : -O-, -S-, -N(R)- et -P(R)- avec R étant un groupement en C₁-C₃₀,
- R¹, R² et R³ étant des groupements éventuellement substitués, identiques ou différents, en C₁-C₃₀ et comprenant éventuellement un ou plusieurs atomes choisi(s) parmi le groupe constitué par: S, P, Si, N et O, et
- les symboles X, R¹ R² et R³ pris deux à deux peuvent former un cycle à 5, 6 ou 7 chainons, et
b) au moins un solvant comprenant au moins un alcool **G.**
- éventuellement au moins une résine polyorganosiloxanique **D ;** et
- éventuellement au moins une charge **E.**

2. - Composition siloxanique **X, caractérisée en ce que** le que le catalyseur **A** a pour formule (II) ou (II') : 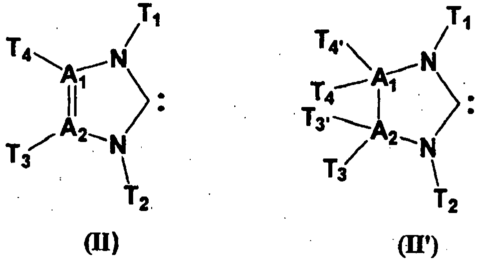 dans lesquelles :
- les symboles A₁ et A₂ représentent indépendamment un atome de carbone ou d'azote, étant entendu que:
1) dans la formule (II), lorsque le symbole A₁ représente un atome d'azote, alors le symbole T₄ n'est pas présent et lorsque le symbole A₂ représente un atome d'azote, alors le symbole T₃ n'est pas présent; et
2) dans la formule (II'), lorsque le symbole A₁ représente un atome d'azote, alors le symbole T₄ ou T_{4'} n'esf pas présent et lorsque le symbole A₂ représente un atome d'azote N, alors le symbole T₃ ou T_{3'} n'est pas présent ;
- les symboles T₃, T_{3'}, T₄ et T_{4'}représentent indépendamment un atome d'hydrogène ; un groupement : alkyle, cycloalkyle éventuellement substitué par un groupe alkyle ou alkoxy; aryle éventuellement substitué par un groupe alkyle ou alkoxy, alcényle, alcynyle ou arylalkyle dans lequel la partie aryle est éventuellement substituée par un groupe alkyle ou alkoxy ;
- les symboles T₃ et T₄ peuvent former ensemble et avec A₁ et A₂ quand ceux-ci représentent chacun un atome de carbone, un aryle étant entendu que dans ce cas T_{3'} et T_{4'} ne sont pas présents;
- les symboles T₁, T₂, T₃, T_{3'}, T₄ et T_{4'} peuvent former deux à deux, lorsqu'ils sont situés sur deux sommets adjacents dans les formules (II) et (II'), une chaîne hydrocarbonée saturée ou insaturée, et
- les symboles T₁ et T₂ représentent indépendamment l'un de l'autre:
1) un groupement : alkyle, un cycloalkyle éventuellement substitué par un groupe alkyle, alkyle perfluoré ou éventuellement substitué par un groupement perfluoroalkyle, cycloalkyle éventuellement substitué par un groupe alkyle ou alkoxy; aryle éventuellement substitué par un groupe alkyle ou alkoxy, alcényle, alcynyle ou arylalkyle dans lequel la partie aryle est éventuellement substituée par un groupe alkyle ou alkoxy ; ou
2) un radical monovalent de formule (IV) suivante :
-V1-V2 (IV)
dans laquelle:
- V1 est un groupement divalent hydrocarboné saturé ou non, de préférence un alkylène linéaire ou ramifié en C₁-C₁₀, éventuellement substitué, et
- V2 est un groupement monovalent choisi dans le groupe constitué par les substituants suivants :
- alcoxy, -OR^{a} avec le symbole R^{a} correspondant à un atome d'hydrogène ou un groupement alkyle ou aryle ;
- silyl, -Si(OR^{b})ₓ(R^{c})₃₋ₓ avec le symbole R^{b} correspondant à un atome d'hydrogène, un groupement alkyle, silyle ou siloxanyle, avec le symbole R^{c} correspondant à un groupe alkyle ou aryle et le symbole x étant un nombre entier égal à 0, 1, 2 ou 3; et
- amine, de préférence -N(R^{a})₂ avec le symbole R^{a} correspondant à un atome d'hydrogène ou à un groupement alkyle ou aryle.

3. **-** Composition selon l'une des revendications précédentes, **caractérisée en ce que** les monomères, oligomères et/ou polymères organosiloxanes **C** -à motifs réactifs ≡SiOH possèdent au moins un motif de formule **(IV)** et sont terminés par des motifs de formule **(V)** ou cycliques constitués de motifs de formule (**IV**) représentées ci-dessous : 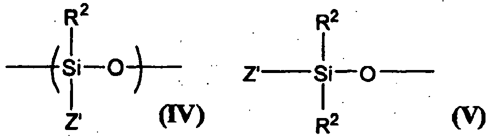 dans lesquelles :
- les symboles R², identiques ou différents et représentent :
• un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
• un radical cycloalkyle contenant entre 5 et 8 atomes de carbone cycliques, éventuellement substitué,
• un radical aryle contenant entre 6 et 12 atomes de carbone éventuellement substitué, ou
• une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alcoxyles contenant 1 à 3 atomes de carbone, et
- les symboles Z' sont semblables ou différents et représentent :
▪ un groupement hydroxyle, ou
▪ un groupement R² avec la condition que par molécule, au moins deux symboles Z représentent un groupement hydroxyle-OH.

4. **-** Composition selon l'une des revendications précédentes, **caractérisée en ce que** les monomères, oligomères, polymères organosiloxanes **B** à motif réactif ≡SiH répondent à la formule générale **(VI) :** 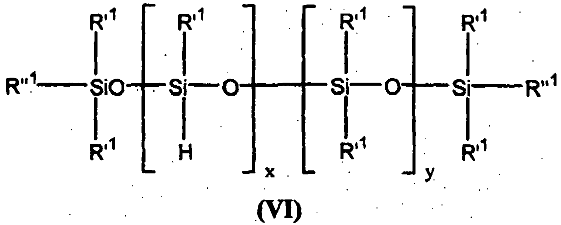 dans laquelle :
- x et y représentent chacun un nombre entier ou fractionnaire variant entre 0 et 200
- R'¹ et R"¹ représentent indépendamment l'un de l'autre :
• un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
• un radical cycloalkyle contenant entre 5 et 8 atomes de carbone cycliques, éventuellement substitué,
• un radical aryle contenant entre 6 et 12 atomes de carbone éventuellement substitué, ou
• une partie aralkyle ayant une partie alkyle contenant entre 5 et 14 atomes de carbone et une partie aryle contenant entre 6 et 12 atomes de carbone, substituée éventuellement-sur la partie aryle, et
- R"¹ pouvant également correspondre à l'hydrogène, avec la condition selon laquelle que les radicaux R"¹ correspondent à l'hydrogène quand x = 0.

5. **-** Composition selon l'une des revendications précédentes, **caractérisée en ce que** les monomères, oligomères, polymères organosiloxanes **C** à motif réactif =SiOH répondent à la formule générale **(VII)** : 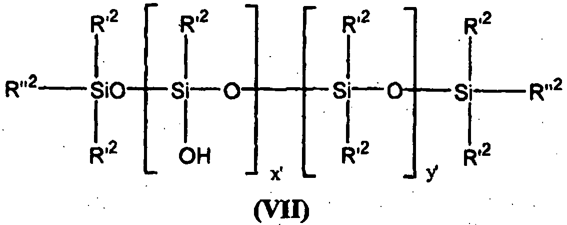 dans laquelle :
- x' et y' représente chacun un nombre entier ou fractionnaire variant entre 0 et 1200,
- R'² et R"² représentent indépendamment l'un de l'autre :
• un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
• un radical cycloalkyle contenant entre 5 et 8 atomes de carbone cycliques, éventuellement substitué,
• un radical aryle contenant entre 6 et 12 atomes de carbone éventuellement substitué, ou
• une partie aralkyle ayant une partie alkyle contenant entre 5 et 14 atomes de carbone et une partie aryle contenant entre 6 et 12 atomes de carbone, substituée éventuellement-sur la partie aryle,
- R"² pouvant également correspondre à OH, avec la condition selon laquelle les radicaux R"² correspondent à OH quand x' = 0.

6. - Utilisation d'au moins une composition catalytique **Y'** telle que définie selon l'une quelconque des revendications 1 à 2 pour la déshydrogénocondensation entre, d'une part, au moins un monomère, oligomère et/ou polymère organosiloxane B ayant, par molécule, au moins un motif réactif ≡SiH et, d'autre part, au moins un monomère, oligomère et/ou polymère organosiloxane **C** présentant, par molécule, au moins un motif réactif ≡SiOH.

7. - Procédé pour polymériser et/ou réticuler une composition siloxanique **X** telle que définie selon l'une quelconque des revendications 1 à 5 **caractérisé en ce que** l'on effectue une réaction de déshydrogénocondensation entre lesdits composés **B** et **C** et **en ce que** ladite déshydrogénocondensation est initiée par la composition catalytique **Y'** telle que définie selon l'une quelconque des revendications 1 à 2.

8. - Procédé de réalisation d'au moins un revêtement continu ou discontinu sur un support, **caractérisé en ce qu'**il consiste essentiellement à appliquer sur ce support une composition siloxanique **X** telle que définie selon l'une quelconque des revendications 1 à 5, puis à laisser réticuler la composition siloxanique éventuellement après activation thermique jusqu'à une température d'au moins 50°C.

9. - Procédé de réalisation d'au moins un article en mousse silicone réticulée, **caractérisé en ce qu'**il consiste essentiellement à faire réticuler une composition siloxanique **X** telle que définie selon l'une quelconque des revendications 1 à 5, dans des conditions de contrôle de la réaction permettant la formation d'une mousse.

10. - Revêtement obtenu par réticulation et/ou polymérisation de la composition siloxanique **X** telle que définie selon l'une quelconque des revendications 1 à 5.

11. - Article constitué d'un matériau solide dont une surface au moins est revêtue de la une composition siloxanique telle que définie selon l'une quelconque des revendications 1 à 5 réticulée et/ou polymérisée thermiquement.

12. - Mousse en silicone réticulée obtenue par réticulation d'une composition siloxanique **X** telle que définie selon l'une quelconque des revendications 1 à 5.

## Patentansprüche

1. Siloxanzusammensetzung **X**, die durch Dehydrokondensation polymerisierbar oder vernetzbar ist, umfassend:
- mindestens ein Organosiloxanmonomer, -oligomer und/oder -polymer **B,** das pro Molekül mindestens eine reaktive =SiH-Gruppierung aufweist;
- mindestens ein Organosiloxanmonomer, -oligomer und/oder -polymer **C,** das pro Molekül mindestens eine reaktive =SiOH-Gruppierung aufweist;
- eine katalytische Zusammensetzung **Y'**, umfassend:
a) eine katalytisch wirksame Menge mindestens eines Polykondensationskatalysators **A,** bei dem es sich um ein Carben der folgenden Formel (I) handelt: 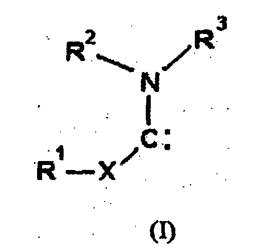 wobei:
- das Symbol X aus der Gruppe bestehend aus den folgenden Atomen bzw. Gruppen ausgewählt ist: -O-, -S-, -N(R)- und -P(R)-, wobei R für eine C₁-C₃₀-Gruppe steht,
- R¹, R² und R³ für gleiche oder verschiedene, gegebenenfalls substituierte C₁-C₃₀-Gruppen, die gegebenenfalls ein oder mehrere Atome aus der Gruppe bestehend aus S, P, Si, N und O enthalten, stehen und
- die Symbole X, R¹, R² und R³ paarweise einen 5-, 6- oder 7-gliedrigen Ring bilden können, und
b) mindestens ein Lösungsmittel, das mindestens einen Alkohol G umfasst;
- gegebenenfalls mindestens ein Polyorganosiloxanharz D und
- gegebenenfalls mindestens einen Füllstoff **E.**

2. Siloxanzusammensetzung **X, dadurch gekennzeichnet, dass** der Katalysator **A** die Formel (II) oder (II') aufweist: 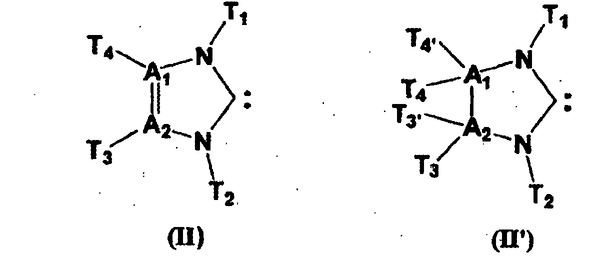 worin:
- die Symbole A₁ und A₂ unabhängig für ein Kohlenstoff- oder Stickstoffatom stehen, mit den Maßgaben, dass:
1) in der Formel (II) dann, wenn das Symbol A₁ für ein Stickstoffatom steht, das Symbol T₄ nicht vorhanden ist, und dann, wenn das Symbol A₂ für ein Stickstoffatom steht, das Symbol T₃ nicht vorhanden ist; und
2) in der Formel (II') dann, wenn das Symbol A₁ für ein Stickstoffatom steht, das Symbol T₄ oder T_{4'} nicht vorhanden ist, und dann, wenn das Symbol A₂ für ein Stickstoffatom N steht, das Symbol T₃ oder T_{3'} nicht vorhanden ist;
- die Symbole T₃, T_{3'}, T₄ und T_{4'} unabhängig für ein Wasserstoffatom, eine Alkylgruppe, eine Cycloalkylgruppe, die gegebenenfalls durch eine Alkyl-oder Alkoxygruppe substituiert ist, eine Arylgruppe, die gegebenenfalls durch eine Alkyl- oder Alkoxygruppe substituiert ist, eine Alkenylgruppe, eine Alkinylgruppe oder eine Arylalkylgruppe, in der der Arylteil gegebenenfalls durch eine Alkyl-oder Alkoxygruppe substituiert ist, stehen;
- die Symbole T₃ und T₄ zusammen und mit A₁ und A₂, wenn diese jeweils für ein Kohlenstoffatom stehen, ein Aryl bilden können, mit der Maßgabe, dass in diesem Fall T_{3'} und T_{4'} nicht vorhanden sind;
- die Symbole T₁, T₂, T₃, T_{3'}, T₄ und T_{4'} dann, wenn sie sich in den Formeln (II) und (II') an zwei benachbarten Spitzen befinden, paarweise eine gesättigte oder ungesättigte Kohlenwasserstoffkette bilden können und
- die Symbole T₁ und T₂ unabhängig voneinander für:
1) eine Alkylgruppe, eine Cycloalkylgruppe, die gegebenenfalls durch eine Alkylgruppe substituiert ist, eine Alkylgruppe, die perfluoriert oder gegebenenfalls durch eine Perfluoralkylgruppe substituiert ist, eine Cycloalkylgruppe, die gegebenenfalls durch eine Alkyl- oder Alkoxygruppe substituiert ist, eine Arylgruppe, die gegebenenfalls durch eine Alkyl- oder Alkoxygruppe substituiert ist, eine Alkenylgruppe, eine Alkinylgruppe oder eine Arylalkylgruppe, in der der Arylteil gegebenenfalls durch eine Alkyl- oder Alkoxygruppe substituiert ist; oder
2) einen einwertigen Rest der folgenden Formel (IV):
-V1-V2 (IV)
stehen, worin:
- V1 für eine gesättigte oder ungesättigte zweiwertige Kohlenwasserstoffgruppe, vorzugsweise ein lineares oder verzweigtes C₁-C₁₀-Alkylen, das gegebenenfalls substituiert ist, steht und
- V2 für eine einwertige Gruppe steht, die aus der Gruppe bestehend aus den folgenden Substituenten ausgewählt ist:
- Alkoxy, -OR^{a}, wobei das Symbol R^{a} einem Wasserstoffatom oder einer Alkyl- oder Arylgruppe entspricht;
- Silyl, -Si(OR^{b})ₓ(R^{c})₃₋ₓ, wobei das Symbol R^{b} einem Wasserstoffatom oder einer Alkyl-, Silyl- oder Siloxanylgruppe entspricht, das Symbol R^{c} einer Alkyl- oder Arylgruppe entspricht und das Symbol x eine ganze Zahl mit einem Wert von 0, 1, 2 oder 3 ist; und
- Amin, vorzugsweise -N(R^{a})₂, wobei das Symbol R^{a} einem Wasserstoffatom oder einer Alkyl- oder Arylgruppe entspricht.

3. Zusammensetzung nach einem der vorhergehenden Ansprüche, **dadurch gekennzeichnet, dass** die Organosiloxanmonomere, -oligomere und/oder -polymere **C** mit reaktiven =SiOH-Gruppierungen mindestens eine Gruppierung der Formel **(IV)** aufweisen und durch Gruppierungen der Formel **(V)** terminiert sind oder cyclische Einheiten sind, welche aus Gruppierungen der Formel **(IV)** bestehen, wobei diese Formeln nachstehend wiedergegeben sind: 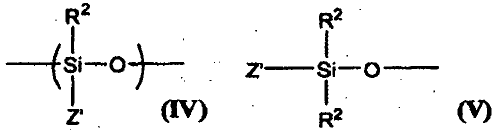 worin:
- die Symbole R² gleich oder verschieden sind und für:
• einen linearen oder verzweigten Alkylrest mit 1 bis 8 Kohlenstoffatomen, der gegebenenfalls durch mindestens ein Halogen, vorzugsweise Fluor, substituiert ist, wobei der Alkylrest vorzugsweise Methyl, Ethyl, Propyl, Octyl und 3,3,3-Trifluorpropyl ist,
• einen gegebenenfalls substituierten Cycloalkylrest mit zwischen 5 und 8 Ringkohlenstoffatomen,
• einen gegebenenfalls substituierten Arylrest mit zwischen 6 und 12 Kohlenstoffatomen oder
• einen Aralkylteil mit einem Alkylteil mit zwischen 5 und 14 Kohlenstoffatomen und einem Arylteil mit zwischen 6 und 12 Kohlenstoffatomen, der gegebenenfalls am Arylteil durch Halogene, Alkylgruppen und/oder Alkoxygruppen mit 1 bis 3 Kohlenstoffatomen substituiert ist, stehen und
- die Symbole Z' gleich oder verschieden sind und für:
▪ eine Hydroxylgruppe oder
▪ eine Gruppe R² stehen, mit der Maßgabe, dass pro Molekül mindestens zwei Symbole Z für eine Hydroxylgruppe -OH stehen.

4. Zusammensetzung nach einem der vorhergehenden Ansprüche, **dadurch gekennzeichnet, dass** die Organosiloxanmonomere, -oligomere und/oder
- polymere **B** mit reaktiver =SiH-Gruppierung der allgemeinen Formel **(VI)** entsprechen: 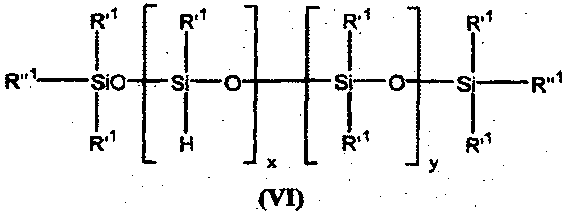 worin:
- x und y jeweils für eine ganze oder gebrochene Zahl im Bereich zwischen 0 und 200 stehen,
- R'¹ und R''¹ jeweils unabhängig voneinander für:
• einen linearen oder verzweigten Alkylrest mit 1 bis 8 Kohlenstoffatomen, der gegebenenfalls durch mindestens ein Halogen, vorzugsweise Fluor, substituiert ist, wobei der Alkylrest vorzugsweise Methyl, Ethyl, Propyl, Octyl und 3,3,3-Trifluorpropyl ist,
• einen gegebenenfalls substituierten Cycloalkylrest mit zwischen 5 und 8 Ringkohlenstoffatomen,
• einen gegebenenfalls substituierten Arylrest mit zwischen 6 und 12 Kohlenstoffatomen oder
• einen Aralkylteil mit einem Alkylteil mit zwischen 5 und 14 Kohlenstoffatomen und einem Arylteil mit zwischen 6 und 12 Kohlenstoffatomen, der gegebenenfalls am Arylteil substituiert ist, stehen und
- R''¹ auch einem Wasserstoff entsprechen kann, mit der Maßgabe, gemäß der die Reste R''¹ Wasserstoff entsprechen, wenn x = 0.

5. Zusammensetzung nach einem der vorhergehenden Ansprüche, **dadurch gekennzeichnet, dass** die Organosiloxanmonomere, -oligomere und/oder -polymere C mit reaktiver ≡SiOH-Gruppierung der allgemeinen Formel (VII) entsprechen: 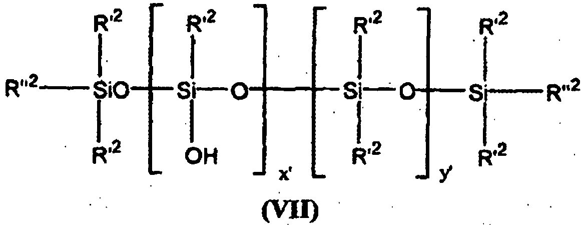 worin:
- x' und y' jeweils für eine ganze oder gebrochene Zahl im Bereich zwischen 0 und 1200 stehen und
- R'² und R''² jeweils unabhängig voneinander für:
• einen linearen oder verzweigten Alkylrest mit 1 bis 8 Kohlenstoffatomen, der gegebenenfalls durch mindestens ein Halogen, vorzugsweise Fluor, substituiert ist, wobei der Alkylrest vorzugsweise Methyl, Ethyl, Propyl, Octyl und 3,3,3-Trifluorpropyl ist,
• einen gegebenenfalls substituierten Cycloalkylrest mit zwischen 5 und 8 Ringkohlenstoffatomen,
• einen gegebenenfalls substituierten Arylrest mit zwischen 6 und 12 Kohlenstoffatomen oder
• einen Aralkylteil mit einem Alkylteil mit zwischen 5 und 14 Kohlenstoffatomen und einem Arylteil mit zwischen 6 und 12 Kohlenstoffatomen, der gegebenenfalls am Arylteil substituiert ist,
stehen, wobei
- R''² auch OH entsprechen kann, mit der Maßgabe, gemäß der die Reste R"² OH entsprechen, wenn x' = 0.

6. Verwendung mindestens einer katalytischen Zusammensetzung **Y'** gemäß einem der Ansprüche 1 bis 2 zur Dehydrokondensation zwischen einerseits mindestens einem Organosiloxanmonomer, -oligomer und/oder -polymer **B,** das pro Molekül mindestens eine reaktive =SiH-Gruppierung aufweist, und andererseits mindestens einem Organosiloxanmonomer, -oligomer und/oder -polymer **C,** das pro Molekül mindestens eine reaktive =SiOH-Gruppierung aufweist.

7. Verfahren zur Polymerisation und/oder Vernetzung einer Siloxanzusammensetzung **X** gemäß einem der Ansprüche 1 bis 5, **dadurch gekennzeichnet, dass** man eine Dehydrokondensation zwischen den Verbindungen **B** und **C** durchführt und die Dehydrokondensation durch die katalytische Zusammensetzung **Y'** gemäß einem der Ansprüche 1 bis 2 initiiert.

8. Verfahren zur Herstellung mindestens einer kontinuierlichen oder diskontinuierlichen Beschichtung auf einem Träger, **dadurch gekennzeichnet, dass** es im Wesentlichen daraus besteht, dass man auf diesen Träger eine Siloxanzusammensetzung **X** gemäß einem der Ansprüche 1 bis 5 aufbringt und dann die Siloxanzusammensetzung vernetzen lässt, gegebenenfalls nach thermischer Aktivierung bis zu einer Temperatur von mindestens 50°C.

9. Verfahren zur Herstellung mindestens eines Gegenstands aus vernetztem Silikonschaumstoff, **dadurch gekennzeichnet, dass** es im Wesentlichen daraus besteht, dass man eine Siloxanzusammensetzung **X** gemäß einem der Ansprüche 1 bis 5 unter Reaktionssteuerungsbedingungen, die die Bildung eines Schaumstoffs ermöglichen, vernetzen lässt.

10. Beschichtung, erhalten durch Vernetzung und/oder Polymerisation der Siloxanzusammensetzung **X** gemäß einem der Ansprüche 1 bis 5.

11. Gegenstand, bestehend aus einem festen Material, dessen Oberfläche mindestens mit einer thermisch vernetzten und/oder polymerisierten Siloxanzusammensetzung gemäß einem der Ansprüche 1 bis 5 beschichtet ist.

12. Vernetzter Silikonschaumstoff, erhalten durch Vernetzung einer Siloxanzusammensetzung **X** gemäß einem der Ansprüche 1 bis 5.

## Claims

1. Siloxane composition **X,** which can be polymerized or crosslinked by means of dehydrogenative condensation, comprising:
- at least one organosiloxane monomer, oligomer and/or polymer **B** having, per molecule, at least one =SiH reactive unit;
- at least one organosiloxane monomer, oligomer and/or polymer **C** having, per molecule, at least one =SiOH reactive unit;
- a catalytic composition **Y**' comprising:
a) a catalytically effective amount of at least one polycondensation catalyst **A** which is a carbene of formula (I) below: 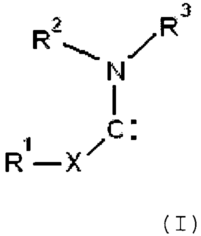 with:
- the symbol X being chosen from the group consisting of the following atoms or groups: -O-, -S-, -N(R)- and -P(R)-with R being a C₁-C₃₀ group,
- R¹, R² and R³ being identical or different, optionally substituted, C₁-C₃₀ groups optionally comprising one or more atoms chosen from the group consisting of: S, P, Si, N and O, and
- the symbols X, R¹, R² and R³ taken in pairs can form a 5-, 6- or 7-membered ring, and
b) at least one solvent comprising at least one alcohol **G.**
- optionally at least one polyorganosiloxane resin **D;** and
- optionally at least one filler **E.**

2. Siloxane composition **X, characterized in that** the catalyst **A** is of formula (II) or (II'): 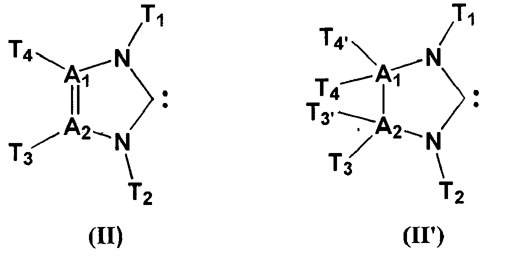 in which:
- the symbols A₁ and A₂ independently represent a carbon or nitrogen atom, it being understood that:
1) in formula (II), when the symbol A₁ represents a nitrogen atom, then the symbol T₄ is not present, and when the symbol A₂ represents a nitrogen atom, then the symbol T₃ is not present; and
2) in formula (II'), when the symbol A₁ represents a nitrogen atom, then the symbol T₄ or T_{4'} is not present, and when the symbol A₂ represents a nitrogen atom N, then the symbol T₃ or T_{3'} is not present;
- the symbols T₃, T_{3'}, T₄ and T_{4'} independently represent a hydrogen atom; or one of the following groups: alkyl, cycloalkyl optionally substituted with an alkyl or alkoxy group, aryl optionally substituted with an alkyl or alkoxy group, alkenyl, alkynyl or arylalkyl in which the aryl part is optionally substituted with an alkyl or alkoxy group;
- the symbols T₃ and T₄ can form, together and with A₁ and A₂, when the latter each represent a carbon atom, an aryl, it being understood that, in this case, T₃, and T_{4'} are not present;
- the symbols T₁, T₂, T₃, T_{3'}, T₄ and T_{4'} can form, in pairs, when they are located on two adjacent ring members in formulae (II) and (II'), a saturated or unsaturated hydrocarbon-based chain, and
- the symbols T₁ and T₂ represent, independently of one another:
1) one of the following groups: alkyl, a cycloalkyl optionally substituted with an alkyl group, alkyl which is perfluorinated or optionally substituted with a perfluoroalkyl group, cycloalkyl optionally substituted with an alkyl or alkoxy group, aryl optionally substituted with an alkyl or alkoxy group, alkenyl, alkynyl or arylalkyl in which the aryl part is optionally substituted with an alkyl or alkoxy group; or
2) a monovalent radical of formula (IV) below:
- V1 - V2 (IV)
in which:
- V1 is a saturated or unsaturated, divalent hydrocarbon-based group, preferably a linear or branched C₁-C₁₀ alkylene, which is optionally substituted, and
- V2 is a monovalent group chosen from the group consisting of the following substituents:
- alkoxy, -OR^{a} with the symbol R^{a} corresponding to a hydrogen atom or an alkyl or aryl group;
- silyl, -Si(OR^{b})ₓ(R^{c})₃₋ₓ with the symbol R^{b} corresponding to a hydrogen atom or an alkyl, silyl or siloxanyl group, with the symbol R^{c} corresponding to an alkyl or aryl group and the symbol x being an integer equal to 0, 1, 2 or 3; and
- amine, preferably -N(R^{a})₂ with the symbol R^{a} corresponding to a hydrogen atom or to an alkyl or aryl group.

3. Composition according to either of the preceding claims, **characterized in that** the organosiloxane monomers, oligomers and/or polymers **C** comprising ≡SiOH reactive units have at least one unit of formula **(IV)** and end with units of formula **(V),** or are cyclic entities consisting of units of formula **(IV)** represented below: 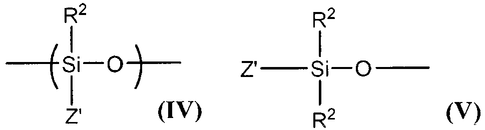 in which:
- the symbols R², which may be identical or different, represent:
• a linear or branched alkyl radical containing 1 to 8 carbon atoms, optionally substituted with at least one halogen, preferably fluorine, the alkyl radicals preferably being methyl, ethyl, propyl, octyl and 3,3,3-trifluoropropyl,
• an optionally substituted cycloalkyl radical containing between 5 and 8 cyclic carbon atoms,
• an optionally substituted aryl radical containing between 6 and 12 carbon atoms, or
• an aralkyl part having an alkyl part containing between 5 and 14 carbon atoms and an aryl part containing between 6 and 12 carbon atoms, optionally substituted on the aryl part with halogens, alkyls and/or alkoxyls containing 1 to 3 carbon atoms, and
- the symbols Z' are similar or different and represent:
□ a hydroxyl group, or
□ a group R² with the condition that, per molecule, at least two symbols Z represent a hydroxyl -OH group.

4. Composition according to one of the preceding claims, **characterized in that** the organosiloxane monomers, oligomers and/or polymers **B** comprising an ≡SiH reactive unit correspond to general formula **(VI):** 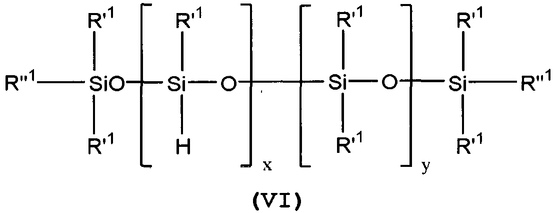 in which:
- x and y each represent an integer or fractional number ranging between 0 and 200,
- R'¹ and R"¹ represent, independently of one another:
• a linear or branched alkyl radical containing 1 to 8 carbon atoms, optionally substituted with at least one halogen, preferably fluorine, the alkyl radicals preferably being methyl, ethyl, propyl, octyl and 3,3,3-trifluoropropyl,
• an optionally substituted cycloalkyl radical containing between 5 and 8 cyclic carbon atoms,
• an optionally substituted aryl radical containing between 6 and 12 carbon atoms, or
• an aralkyl part having an alkyl part containing between 5 and 14 carbon atoms and an aryl part containing between 6 and 12 carbon atoms, optionally substituted on the aryl part, and
- it being possible for R"¹ to also correspond to hydrogen, with the condition according to which the radicals R''¹ correspond to hydrogen when x = 0.

5. Composition according to one of the preceding claims, **characterized in that** the organosiloxane monomers, oligomers and/or polymers **C** comprising an =SiOH reactive unit correspond to general formula (VII) : 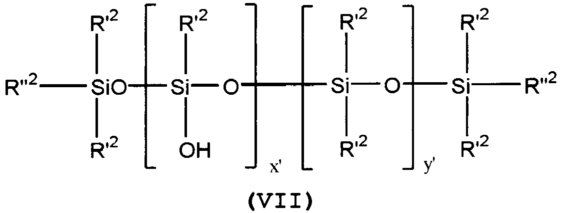 in which:
- x' and y' each represent an integer or fractional number ranging between 0 and 1200,
- R'² and R"² represent, independently of one another:
• a linear or branched alkyl radical containing 1 to 8 carbon atoms, optionally substituted with at least one halogen, preferably fluorine, the alkyl radicals preferably being methyl, ethyl, propyl, octyl and 3,3,3-trifluoropropyl,
• an optionally substituted cycloalkyl radical containing between 5 and 8 cyclic carbon atoms,
• an optionally substituted aryl radical containing between 6 and 12 carbon atoms, or
• an aralkyl part having an alkyl part containing between 5 and 14 carbon atoms and an aryl part containing between 6 and 12 carbon atoms, optionally substituted on the aryl part,
- it being possible for R''² to also correspond to OH, with the condition according to which the radicals R''² correspond to OH when x' = 0.

6. Use of at least one catalytic composition **Y**' as defined in either one of Claims 1 and 2, for dehydrogenative condensation between, on the one hand, at least one organosiloxane monomer, oligomer and/or polymer **B** having, per molecule, at least one ≡SiH reactive unit and, on the other hand, at least one organosiloxane monomer, oligomer and/or polymer **C** having, per molecule, at least one ≡SiOH reactive unit.

7. Process for polymerizing and/or crosslinking a siloxane composition **X** as defined in any one of Claims 1 to 5, **characterized in that** a dehydrogenative condensation reaction is carried out between said compounds **B** and **C** and **in that** said dehydrogenative condensation is initiated by the catalytic composition **Y'** as defined in either one of Claims 1 and 2.

8. Process for producing at least one continuous or discontinuous coating on a support, **characterized in that** it consists essentially in applying to this support a siloxane composition **X** as defined in any one of Claims 1 to 5, and then in allowing the siloxane composition to crosslink, optionally after heat activation up to a temperature of at least 50°C.

9. Process for producing at least one article made of crosslinked silicone foam, **characterized in that** it consists essentially in crosslinking a siloxane composition **X** as defined in any one of Claims 1 to 5, under conditions for controlling the reaction enabling the formation of a foam.

10. Coating obtained by crosslinking and/or polymerizing the siloxane composition **X** as defined in any one of Claims 1 to 5.

11. Article consisting of a solid material, at least one surface of which is coated with a thermally polymerized and/or crosslinked siloxane composition as defined in any one of Claims 1 to 5.

12. Crosslinked silicone foam obtained by crosslinking a siloxane composition **X** as defined in any one of Claims 1 to 5.
